(19) **Europäisches Patentamt European Patent Office Office européen des brevets**

(11) **EP 4 528 902 A2**

(12) **EUROPEAN PATENT APPLICATION**

(43) Date of publication:
26.03.2025 Bulletin 2025/13

(21) Application number: 24199818.6

(22) Date of filing: 11.09.2024

(51) International Patent Classification (IPC):
$H01M\ 50/403^{(2021.01)}$ $\quad H01M\ 50/434^{(2021.01)}$
$H01M\ 50/446^{(2021.01)}$ $\quad H01M\ 50/451^{(2021.01)}$
$H01M\ 50/489^{(2021.01)}$ $\quad H01M\ 10/0525^{(2010.01)}$

(52) Cooperative Patent Classification (CPC):
H01M 50/403; H01M 50/434; H01M 50/446;
H01M 50/451; H01M 50/489; H01M 10/0525;
H01M 50/417

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.09.2023 KR 20230124472

(71) Applicants:
• SK Innovation Co., Ltd.
Seoul 03188 (KR)
• SK ie technology Co., Ltd.
Jongno-gu
Seoul
03188 (KR)

(72) Inventors:
• KWACK, Won Sub
34124 Daejeon (KR)
• KIM, Sang Hoon
34124 Daejeon (KR)
• BAE, Heung Taek
34124 Daejeon (KR)
• LIM, Ji Sook
34124 Daejeon (KR)

(74) Representative: Prüfer & Partner mbB
Patentanwälte · Rechtsanwälte
Sohnckestraße 12
81479 München (DE)

(54) **SEPARATOR AND ELECTROCHEMICAL DEVICE INCLUDING THE SAME**

(57) Provided are a separator and an electrochemical device including the same, as well as a method for manufacturing the separator. According to an aspect of the present disclosure, a separator including: a porous substrate; and an inorganic particle layer which is placed on one or both surfaces of the porous substrate and includes inorganic particles and an inorganic binder, wherein the inorganic particle layer includes an organic compound having a lower content than the inorganic binder and the inorganic binder includes a metal silicate is provided.

FIG. 1

**Separator**

EP 4 528 902 A2

## Description

### TECHNICAL FIELD

The following disclosure relates to a separator and an electrochemical device including the same, and to a method for manufacturing the separator.

### BACKGROUND

In recent years, in line with the high capacity and high output trends of a secondary battery, there has been a growing demand for high strength, high permeability, and thermal stability of a separator, and improved characteristics of a separator for electrical safety of a secondary battery during charging and discharging. A separator for a lithium secondary battery is required to have high mechanical strength for improving safety during the manufacturing process and during the use of the battery, and a separator is also required to have high permeability and high thermal stability for improving capacity and output.

Meanwhile, a separator is being studied, with the aim of thinning of the separator in order to provide high capacity and high output characteristics of an electrochemical device, but when the separator is thinned, its mechanical strength and/or heat resistance is/are decreased. When mechanical strength and/or heat resistance is/are decreased, a safety problem during manufacturing process and use of a battery is more likely to occur. As an example, a short circuit between electrodes due to damage or deformation of the separator caused by a temperature rise in the battery may occur, thereby increasing a risk of overheating or fire of the battery.

In order to solve these problems, a separator having improved characteristics e.g., regarding safety (for example in terms of heat resistance), permeability, adhesion, and/or performance, is provided, as well as an electrochemical device comprising this separator, and a method for manufacturing the separator.

### SUMMARY

According to an aspect of the present invention, a separator having excellent heat resistance even at a small thickness, is provided, and an electrochemical device including the same.

According to another aspect of the present invention, a separator having improved adhesion and permeability even at a small thickness, is provided, and an electrochemical device including the same.

Still according to another aspect of the present invention, an electrochemical device having excellent performance is provided.

The separator of the present disclosure may be widely applied to a green technology field such as electric vehicles, battery charging stations, and other solar power generations and wind power generations using batteries. In addition, the separator of the present disclosure may be used in eco-friendly electric vehicles, hybrid vehicles, and the like which suppress air pollution and greenhouse gas emissions to prevent climate change.

In one general aspect, a separator includes, or consists of: a porous substrate; and an inorganic particle layer which is placed on one or both, preferably both, surfaces of the porous substrate and includes inorganic particles and an inorganic binder, wherein the inorganic particle layer further includes an organic compound having a lower content than the inorganic binder and the inorganic binder includes, preferably is, a metal silicate.

In an alternative aspect, the inorganic particle layer consists of inorganic particles, an inorganic binder, and an organic compound at a lower content than the inorganic binder, and the inorganic binder includes, preferably is, a metal silicate.

In an exemplary embodiment, the metal silicate may connect and fix the inorganic particles together and the inorganic particle layer and the porous substrate together.

In an exemplary embodiment, the organic compound may include a first organic compound of any one or more selected from the group consisting of polycarboxylates, sulfonates, and polysiloxane-based compounds, a second organic compound of any one or more selected from the group consisting of ester-based polymers, amide-based polymers, imide-based polymers, acryl-based polymers, styrene-based polymers, vinyl alcohol-based polymers, vinylpyrrolidone-based polymers, cellulose-based polymers, and fluorine-based polymers, or a combination thereof.

In an exemplary embodiment, the organic compound may include less than 30 wt% of the second organic compound, based on the total weight of the organic compound.

In an exemplary embodiment, the organic compound may not include the second organic compound.

In an exemplary embodiment, the metal of the metal silicate may be any one or more or two or more metals selected from the group consisting of Group 1, Group 2, and Group 13 metals.

In an exemplary embodiment, the metal of the metal silicate may be any one or more or two or more metals selected from the group consisting of Group 1 and Group 2 metals.

In an exemplary embodiment, the metal silicate may be represented by the following Chemical Formula 1:

[Chemical Formula 1] $M_2O \cdot nSiO_2$

wherein M is an alkali metal, and n is 4 to 10.

In an exemplary embodiment, the inorganic particles may include any one or two or more selected from the group consisting of metal hydroxides, metal oxides, metal nitrides, metal carbides, and metal sulfates.

In an exemplary embodiment, the inorganic particles may have an average particle diameter (D50) of 1 $\mu$m or less.

In an exemplary embodiment, a total thickness of the inorganic particle layer formed on the porous substrate may be 5 $\mu$m or less.

In an exemplary embodiment, a heat shrinkage rate in the width direction which is measured after allowing the separator to stand at 130°C for 60 minutes may be 3% or less.

In an exemplary embodiment, a heat shrinkage rate in the width direction which is measured after allowing the separator to stand at 150°C for 60 minutes may be 7% or less.

In an exemplary embodiment, the inorganic particle layer may include 0.1 to 20 parts by weight of the metal silicate with respect to 100 parts by weight of the inorganic particles.

In an exemplary embodiment, the porous substrate may have a polar group on the surface.

In another general aspect, an electrochemical device includes the separator as described above.

In an exemplary embodiment, the electrochemical device may be an energy storage device, specifically a secondary battery, more specifically a lithium secondary battery.

In another general aspect, a method for manufacturing a separator comprises (i) preparing a coating slurry including inorganic particles and a metal silicate; (ii) coating on one or both surfaces of a porous substrate with the coating slurry, thereby obtaining a coated porous substrate; and drying the coated porous substrate of step (ii), thereby obtaining a separator. The coating slurry of (i) may optionally further comprised one or more organic compounds as a dispersant and/or a wetting agent. The separator manufactured by this method may be a separator as described above.

Other features and aspects will be apparent from the following detailed description, the drawings, and the claims.

## BRIEF DESCRIPTION OF THE DRAWINGS

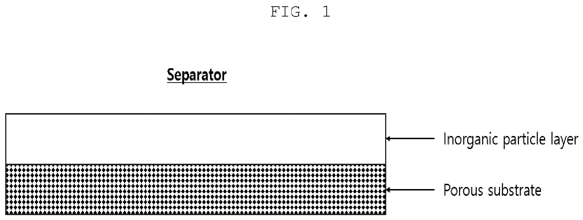

Figure 1 is a schematic cross-sectional view of a separator according to one embodiment.

## DETAILED DESCRIPTION OF EMBODIMENTS

Hereinafter, the present disclosure will be described in detail. However, it is only illustrative and the present disclosure is not limited to the specific embodiments which are illustratively described in the present disclosure.

In addition, the singular form used in the specification and claims appended thereto may be intended to include a plural form also, unless otherwise indicated in the context.

In addition, the numerical range used in the present specification includes all values within the range including the lower limit and the upper limit, increments logically derived in a form and span of a defined range, all double limited values, and all possible combinations of the upper limit and the lower limit in the numerical range defined in different forms. Unless otherwise defined in the present specification, values which may be outside a numerical range due to experimental error or rounding off of a value are also included in the defined numerical range.

Furthermore, throughout the specification, unless explicitly described to the contrary, "comprising" any constituent elements will be understood to imply further inclusion of other constituent elements rather than exclusion of other constituent elements.

In the present specification, it will be understood that when an element such as a layer, film, region, or substrate is referred to as being "on" or "above" another element, it may be directly on the other element or intervening elements may also be present therebetween.

In the present specification, "average particle diameter" refers to "D50", and "D50" refers to a particle diameter of an inorganic particle corresponding to 50% in terms of a volume-based integrated fraction. The average particle diameter may be derived from particle size distribution results obtained by collecting a sample of inorganic particles to be measured in accordance with the standard of ISO 13320-1 and performing analysis using S3500 available from MICROTRAC.

Figure 1 is a schematic cross-sectional view of a separator according to one embodiment. Referring to Fig. 1, the present disclosure provides a separator including: a porous substrate; and an inorganic particle layer which is placed on one or both surfaces of the porous substrate and includes inorganic particles and an inorganic binder, wherein the inorganic particle layer includes an organic compound having a lower content than the inorganic binder and the inorganic binder includes a metal silicate.

As a method for securing battery safety, a composite separator in which a porous substrate includes inorganic particles and a polymer-based organic binder, so that the inorganic particles are connected to each other by the organic binder and also, a porous inorganic particle layer in the form of being adhered to the porous substrate by the organic binder is formed, has been developed.

However, the organic/inorganic composite separator has a problem of reduced heat shrinkage rate properties at a high temperature when a thin inorganic particle layer at or below a certain thickness is formed. Accordingly, thinning of the separator is substantially not possible and is not appropriate for a battery of high capacity/high output.

Meanwhile, when an organic binder is used, an organic binder in a relatively large amount at or above a certain content is used in order to have a sufficient adhesive strength. Accordingly, there are problems such as a chemical reaction between an electrolyte solution and organic binder components of a battery occurring to cause deformation of binder components or gas production by the reaction, or the gas leaking by heat to reduce a battery life. In addition, there are various problems such as an excessive amount of an organic binder being dissolved in an electrolyte and eluted to cause performance degradation of an electrolyte, the organic binder being swollen by the electrolyte solution to close a porous layer, or the volume of a battery being increased. It was confirmed that the problems due to the organic binder as such are further deepened when a thin inorganic particle layer is formed.

Thus, the inventors of the present disclosure continued to study in order to solve the problems of the organic/inorganic composite separator described above while having excellent heat resistance even at a smaller thickness. As a result, it was confirmed that a separator having excellent permeability while having heat resistance and adhesion even at a small thickness may be provided by forming an inorganic particle layer including an inorganic binder including a metal silicate and an organic compound at a lower content than the inorganic binder.

In an exemplary embodiment, the metal silicate may connect and fix the inorganic particles together and the inorganic particle layer and the porous substrate together. The separator is considered to show high adhesion, by connecting or anchoring the inorganic particles together and/or the inorganic particle layer and the porous substrate together by the metal silicate.

The separator according to an exemplary embodiment may have pores formed by connecting the inorganic particles to each other by the metal silicate. That is, the inorganic particle layer may include the inorganic particles and the inorganic binder, and may be a porous inorganic particle layer in which the inorganic particles are connected and fixed by the inorganic binder to form pores.

In an exemplary embodiment, any one or both selected from a surface and a pore part of the porous substrate may be coated with the metal silicate. Accordingly, an adhesive strength between the inorganic particle layer and the surface of the porous substrate may be excellent. This is considered to be due to the fact that the metal silicate connects and fixes the inorganic particles together and also penetrates into the pores formed on the porous substrate and are anchored, thereby having an effect of being firmly stuck to the porous substrate.

In an exemplary embodiment, the inorganic particle layer may be formed on 90% or more, specifically 95% or more, and more specifically 100% of the entire area of each surface of the porous substrate, except the case in which fine defects occurs, for one or both surfaces of the porous substrate, and the particle layer particle layer has pores formed between the inorganic particles which are adjacent to each other.

In an exemplary embodiment, the organic compound may refer to an additive used in the manufacture of a separator known in the art. An example of the additive may include organic compounds including a dispersant, a wetting agent, a lubricant, an antifoaming agent, a thickener, or the like. Specifically, the organic compound may include any one or more selected from a dispersant which prevents agglomeration of inorganic particles in a coating slurry used in forming the inorganic particle layer, a wetting agent which improves coatability of the slurry, and an organic binder which improves adhesion between the inorganic particles and/or between the inorganic particle layer and the porous substrate. In a preferred exemplary embodiment, the organic compound is a wetting agent. In a further preferred exemplary embodiment, the wetting agent is dioctyl sodium sulfosuccinate.

Since the separator according to an exemplary embodiment uses an inorganic binder including a metal silicate and an organic compound including an organic binder at a significantly small amount as compared with a conventional amount, excellent heat shrinkage rate properties at a small thickness which may not be implemented with a separator using an excessive amount of an organic compound including an organic binder may be implemented. Accordingly, it may prevent ignition or rupture due to an abnormal phenomena such as a rapid temperature rise, allow a separator for a secondary battery to be thinned, and be appropriate for being applied to a high capacity/high power battery. In addition, the separator according to an exemplary embodiment has an excellent bonding force between particles included in the inorganic particle layer and an excellent adhesive strength between the porous substrate and the inorganic particle layer.

In the separator according to an exemplary embodiment, since the inorganic particle layer includes a metal silicate as an inorganic binder, problems such as pore blockage and swelling which occur upon using an organic compound such as a polymer-based organic binder do not occur, ion movement is very good, there are no obstacles to ion movement of lithium ions or other undesired events, and electrical properties such as capacity or efficiency of a battery may be significantly improved.

In an exemplary embodiment, the organic compound may include a first and a second organic compound. It is preferred that the first and the second organic compound differ from each other. In an exemplary embodiment, the organic compound may include a first organic compound of any one or more selected from the group consisting of polycarboxylates, sulfonates, and polysiloxane-based compounds; a second organic compound of any one or more selected from the group consisting of ester-based polymers, amide-based polymers, imide-based polymers, acryl-based polymers, styrene-based polymers, vinyl alcohol-based polymers, vinylpyrrolidone-based polymers, cellulose-based polymers, and fluorine-based polymers; or a combination thereof; but the organic compound may be replaced with other constituent elements as long as it does not depart from the scope of the present disclosure.

In an exemplary embodiment, the first organic compound may be an additive other than the organic binder. Herein, the additive other than the binder may be any one or more of a dispersant, a wetting agent, a lubricant, an antifoaming agent, and a thickener, and may be an additive which may be commonly included in the inorganic particle layer without limitation. In addition, the dispersant may prevent agglomeration of inorganic particles in a coating slurry used when forming the inorganic particle layer, and the wetting agent may improve coatability of the slurry. Therefore, the coating slurry and hence the obtained inorganic layer may optionally further comprise one or more organic compounds as a dispersant and/or a wetting agent.

In an exemplary embodiment, the second organic compound may be an organic binder, and the organic binder may connect and fix the inorganic particles together and the inorganic particle layer and the porous substrate together.

The polycarboxylate which may be used as the organic compound and which may be present in the first organic compound may be any one or more selected from sodium polyacrylate, ammonium polyacrylate, and the like, without limitation. The sulfonate, which may be used as the organic compound and which may be present in the first organic compound, may be any one or more selected from dialkyl sulfosuccinate, alkyl diphenyl ether disulfonate, alkylbenzene sulfonate, and the like, without limitation. The polysiloxane-based compound may be any one or more selected from 3-(polyethylene)propyl heptamethyltrisiloxane, 3-(3-hydroxypropyl)-heptamethyltrisiloxane ethoxylated acetate, methyl(propylhydroxide)(ethoxylated)bis(triethylsiloxy)sila ne, and the like. In a preferred embodiment, the polycarboxylate is dialkyl sulfosuccinate.

The ester-based polymer may be any one or more selected from polyethylene terephthalate, polyethylene naphthalate (PEN), and the like. The amide-based polymer may be any one or more selected from polyamide-6, polyamide-66, and the like. The imide-based polymer may be any one or more selected from polyimide, polyether imide, polyester imide, and the like, and the acryl-based polymer may be any one or more selected from polyacrylamide, polymethacrylate, polyethyl acrylate, polyacrylate, polybutyl acrylate, an acrylic acid-methacrylic acid copolymer, and the like. The styrene-based polymer may be any one or more selected from polystyrene, poly-$\alpha$-methylstyrene, polybromostyrene, and the like. The vinyl alcohol-based polymer may be any one or more selected from polyvinyl alcohol, polyvinyl acetate, a polyvinyl acetate-polyvinyl alcohol copolymer, and the like. The vinylpyrrolidone-based polymer may be any one or more selected from copolymers including polyvinylpyrrolidone and vinylpyrrolidone and the like. In addition, the cellulose-based polymer may be any one or more selected from carboxylmethyl cellulose, cellulose acetate propionate, cellulose acetate, cellulose acetate butylate, and the like. The fluorine-based polymer may be any one or more selected from polyvinylidene fluoride, polytetrafluoroethylene, polyhexafluoropropylene, polyvinylidenefluoridehexafluoropropylene, polychlorotrifluoroethylene, and the like.

In an exemplary embodiment, the organic compound may include less than 30 wt%, specifically less than 20 wt%, less than 10 wt%, or less than 5 wt% of the second organic compound, based on the total weight of the organic compound. When the second organic compound is included in the range described above, a separator in which problems such as pore blockage and swelling due to the second organic compound do not occur, ion movement is very good, there are no obstacles to ion movement of lithium ions and similar disadvantages or undesired effects, and electrical properties such as capacity or efficiency of a battery may be significantly improved may be provided.

In a specific example, the organic compound may not include the second organic compound. In other words, in this case, there is no organic binder present. Since the separator according to an exemplary embodiment includes a metal silicate as an inorganic binder, even when the separator does not include the second organic compound which may be used as an organic binder, a problem of battery performance degradation while having excellent heat resistance and adhesion even at a small thickness may be suppressed more effectively.

In an exemplary embodiment, the content of the organic compound is not particularly limited as long as it is lower than the content of the inorganic binder. For example, the inorganic particle layer may include 0.001 to 15 parts by weight, 0.001 to 13 parts by weight, or 0.001 to 8 parts by weight of the organic compound with respect to 100 parts by weight of the inorganic particles. The content of the organic compound may be more specifically 0.001 to 5 parts by weight, 0.01 to 3 parts by weight, 0.1 to 2 parts by weight, or 0.1 to 1 part by weight, with respect to 100 parts by weight of the inorganic particles. In a preferred embodiment, the content of the organic compound may be 0.1 to 0.5 parts by weight. In a further preferred embodiment, the content of the organic compound is 0.2 parts by weight. In a further preferred embodiment, the content of the organic compound is 0.2 parts by weight, and the organic compound is dioctyl sodium sulfosuccinate.

In an exemplary embodiment, the metal of the metal silicate may be any one or more or two or more metals selected from the group consisting of Group 1, Group 2, and Group 13 metals. That is, the metal may be one or more selected from lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), and indium (In).

In an exemplary embodiment, the metal of the metal silicate may be preferably any one or more or two or more metals selected from the group consisting of Group 1 and Group 2 metals, in terms of improving heat resistance and adhesion of the separator. That is, the metal may be one or more selected from lithium (Li), sodium (Na), potassium (K), rubidium (Rb), cesium (Cs), beryllium (Be), magnesium (Mg), calcium (Ca), strontium (Sr), and barium (Ba). More specifically, the metal of the metal silicate may be one or more alkali metals selected from lithium (Li), sodium (Na), potassium (K), rubidium (Rb), and cesium (Cs). Since the alkali metal silicate has the lowest heat shrinkage rate among metals having different heat shrinkage rates, it may implement the best heat resistance.

In an exemplary embodiment, the metal silicate may have a structure in which a metal oxide and silica are contained at a certain mole ratio. Specifically, a mole ratio between the metal oxide and the silica may be 1:4 to 1:10, specifically 1:4 to 1:9, more specifically 1:4.5 to 1:8.5, and more specifically 1:5 to 1:8.

In an exemplary embodiment, the metal silicate may be represented by the following Chemical Formula 1:

$$[\text{Chemical Formula 1}] \qquad M_2O \cdot nSiO_2$$

wherein M is an alkali metal, and n is 4 to 10.

Since the metal silicate satisfies Chemical Formula 1, an effect of connecting and fixing the inorganic particles together and the inorganic particle layer and the porous substrate together may be implemented better. Accordingly, the separator according to an exemplary embodiment may have a better bonding force between the inorganic particles and a better adhesive strength between the porous substrate and the inorganic particle layer, and also implement better heat shrinkage rate properties at a small thickness.

In Chemical Formula 1, n may be 4 to 9, 4.5 to 8.5, or 5 to 8.

In a further preferred embodiment, the metal silicate is lithium silicate ($(Li_2O \cdot nSiO_2)$), preferably with n is 5, 3.5, 7, or 10.5; sodium silicate ($Na_2O \cdot nSiO_2$), preferably with n is 5; potassium silicate ($K_2O \cdot nSiO_2$), preferably with n is 5; or aluminum silicate ($Al_2O_3 \cdot nSiO_2$), preferably with n is 5.

In an exemplary embodiment, the inorganic particles are not limited as long as they are inorganic particles used in the art. As a non-limiting example, the inorganic particles may include any one or two or more selected from the group consisting of metal hydroxides, metal oxides, metal nitrides, metal carbides, and metal sulfates. For example, the inorganic particles may include any one or two or more selected from the group consisting of magnesium oxide (MgO), magnesium hydroxide ($Mg(OH)_2$), alumina ($Al_2O_3$), boehmite ($\gamma$-AlO(OH)), aluminum hydroxide ($Al(OH)_3$), silica ($SiO_2$), silicon carbide (SiC), calcium oxide (CaO), titanium dioxide ($TiO_2$), strontium titanate ($SrTiO_3$), barium titanate ($BaTiO_3$), barium sulfate ($BaSO_4$), zinc oxide (ZnO), yttrium oxide ($Y_2O_3$), zirconium oxide ($ZrO_2$), tin oxide ($SnO_2$), cerium oxide ($CeO_2$), and the like. In terms of stability of a battery, the inorganic particles may be any one or two or more metal hydroxide particles selected from the group consisting of boehmite, aluminum hydroxide ($Al(OH)_3$), and magnesium hydroxide ($Mg(OH)_2$). In a preferred embodiment, the inorganic particle is boehmite ($\gamma$-AlO(OH)).

In an exemplary embodiment, the shape of the inorganic particles is not limited, and may be spherical, oval, needle-shaped, and the like.

In an exemplary embodiment, the inorganic particles may have an average particle diameter (D50) of 1 $\mu$m or less, 0.7 um or less and 0.01 um or more, 0.05 um or more, or a value between the numerical values, and specifically, may be 0.01 to 1 $\mu$m or 0.05 to 0.7 um. When the average particle diameter of the inorganic particles satisfies the range described above, better heat shrinkage rate properties may be implemented at a small thickness.

Preferably, the inorganic particles may have an average particle diameter (D50) of 0.5 um or less, specifically 0.35 um or less, and since the separator according to an exemplary embodiment includes the metal silicate and the inorganic particles having the average particle diameter (D50) of 0.5 $\mu$m or less or 0.35 $\mu$m or less, the heat shrinkage rate properties at a small thickness may be more improved.

In a further exemplary embodiment, the inorganic particles may have an average particle diameter (D50) of 0.2 $\mu$m.

In an exemplary embodiment, the inorganic particle layer may be coated on one or both surfaces of the porous substrate, and when the inorganic particle layer is coated on both surfaces of the porous substrate, the thicknesses of the inorganic particle layers coated on one surface and the other surface may be the same or different.

In a further exemplary embodiment, the inorganic particle layer is formed on both surfaces of the porous substrate. In a further exemplary embodiment, the inorganic particle layer is formed in both surfaces of the porous substrate and has the same thickness on both surfaces, preferably the average thickness of the inorganic particle layer is 1.0 $\mu$m respectively on each surface of the porous substrate.

In the present invention, the expression "total thickness of the inorganic particle layer" denotes the average thickness of all layers of inorganic particles that are formed (i.e., that are present) on the surface or surfaces of the porous substrate. For example, if there is an inorganic particle layer only present on one surface of the porous substrate, then the total thickness of the inorganic particle layer denotes the average thickness of this inorganic particle layer on one side of the porous substrate. If an inorganic particle layer is present on both surfaces of the porous substrate, then the total thickness of the inorganic particle layer denotes the total average thickness of these two layers together. In other words, the total average thickness is the sum of the average thickness of the inorganic particle layer that is present on the one side of the porous substrate, and that is present on the other side of the porous substrate. Further, if there is an inorganic particle layer present on both sides, then the particle layers can have the same or different average thickness.

In an exemplary embodiment, the total thickness of the inorganic particle layer formed on the porous substrate may be 5 $\mu$m or less, 3 $\mu$m or less, 2.5 um or less, 2 um or less and 0.1 um or more, 0.5 um or more, 1 um or more or a value between the numerical values. Specifically, the total thickness of the inorganic particle layer may be 0.1 to 5 $\mu$m, 0.5 to 3 $\mu$m, 1 to 2.5 um, or 1 to 2 um. However, since it means that significantly improved heat resistance and adhesion may be implemented even at or below the thickness in the range described above, the present disclosure is not necessarily limited thereto, and the total thickness of the inorganic particle layer may be changed as long as it does not depart from the range of the present disclosure.

The separator according to an exemplary embodiment may have excellent heat resistance even at a small thickness. In an exemplary embodiment, a heat shrinkage rate in the width direction measured after allowing the separator to stand at 130°C for 60 minutes may be 3% or less, preferably 2% or less, and more preferably 1% or less.

In addition, the separator according to an exemplary embodiment may have excellent heat shrinkage rate properties at a higher temperature. In an exemplary embodiment, a heat shrinkage rate in the width direction measured after allowing the separator to stand at 150°C for 60 minutes may be 7% or less, preferably 5% or less, and more preferably 3% or less.

In the Gurley permeability measured in accordance with ASTM D726, the separator according to an exemplary embodiment may have a $\Delta$ Gurley permeability calculated by the following Calculation Formula 1 of 50 sec/100 cc or less, specifically 40 sec/100 cc or less and the lower limit thereof may be as an example, 5 sec/100 cc:

$\Delta$ Gurley permeability (sec/100 cc) = Gurley permeability of separator having inorganic particle layer formed thereon - Gurley permeability of porous substrate

In an exemplary embodiment, the inorganic particle layer may include 0.1 to 20 parts by weight, 1 to 15 parts by weight, or 1 to 10 parts by weight of the metal silicate with respect to 100 parts by weight of the inorganic particles, but is not necessarily limited thereto.

In an exemplary embodiment, the porous substrate may include a polar group on the surface. Herein, the polar group may be, for example, a carboxylic acid group, an aldehyde group, or a hydroxyl group, but is not limited thereto. Since the separator according to an exemplary embodiment includes the porous substrate including a polar group on the surface, excellent heat shrinkage rate properties and adhesion at a small thickness may be simultaneously implemented.

The polar group may be introduced by a specific surface treatment, and specifically, though the means is not limited, the surface treatment may be a plasma treatment, a corona discharge treatment, or an electron beam treatment in the presence of one or more selected from oxygen, air, and ozone.

In an exemplary embodiment, as the porous substrate, a porous polymer film, a sheet, a woven fabric, a non-woven fabric, and the like manufactured from a polymer used as a separator may be variously used, and also, a porous substrate having a laminated structure in which each layer is laminated in two or more layers may be included.

In an exemplary embodiment, the porous substrate may be a polyolefin-based porous substrate such as polyethylene, polypropylene, or copolymers thereof, but is not thereto, and all porous substrates known as a porous substrate of a separator of an electrochemical device may be used.

In an exemplary embodiment, the porous substrate may have a porosity of 20 to 60%, specifically 30 to 60%, more specifically 40 to 50%, but is not limited thereto.

In an exemplary embodiment, the porous substrate may have thickness of 1 to 25 $\mu$m, 3 to 20 um, or 5 to 15 um, but is not necessarily limited thereto. The porosity is calculated using following Equations.

$$Porosity(\%) = (1 - True\ Density/Bulk\ Density)\ X\ 100$$

True Density (g/cm$^3$) = Mass of CCS (g) /Volume of CCS (cm$^3$) *Volume (cm$^3$) = Thickness of CCS (cm) X area of CCS (cm$^2$) ;

CCS = Ceramic coated separator (Porous ceramic + Porous PE)

Bulk Density (g/cm$^3$) = $\rho_{ceramic}$ X ($m_{ceramic}/m_{composite}$) + $\rho_{pe}$ X ($m_{PE}/m_{composite}$)

* $\rho$ = Theoretical density of bulk materials;

Composite(Non-pouous ceramic + Non-pouous PE)

In an exemplary embodiment, the separator may have an average thickness of 5 to 30 $\mu$m, 10 to 25 um, or 10 to 20 $\mu$m, but is not necessarily limited thereto. The thickness is measured as Mitutoyo Thickness Gauge.

The average thickness is measured by the following method. The separator is laminated into 10 layers, and the thickness is measured using a Mitutoyo Thickness Gauge. The thickness is then divided by 10 to obtain the thickness of a single layer. The same procedure is repeated for 5 spots in the TD direction, and the average value is calculated.

In an exemplary embodiment, the inorganic particle layer including an organic compound lower content than the inorganic binder means that the case, in which the inorganic particle layer includes no organic compound, is also included. In an exemplary embodiment, the inorganic particle layer consists only of inorganic particles and inorganic binder, e.g., a metal silicate, as disclosed elsewhere herein. That is, the inorganic particle layer may be formed of inorganic particles and a metal silicate inorganic binder. The inorganic particle layer as such may be adhered on the porous substrate with an excellent adhesive strength even without the organic compound described above to secure battery stability, and also may implement excellent heat shrinkage rate properties at a small thickness which is not implemented with the separator using an excessive amount of the organic compound such as an organic binder.

Hereinafter, a method for manufacturing a separator of the present disclosure will be described.

The method for manufacturing a separator of the present disclosure may include: preparing a coating slurry including inorganic particles and a metal silicate; and coating one or both surfaces of a porous substrate with the coating slurry and drying to form an inorganic particle layer.

Thus, the present invention further refers to a method for manufacturing a separator, comprising the following steps:

(i) preparing a coating slurry including inorganic particles and a metal silicate; (ii) coating on one or both surfaces of a porous substrate with the coating slurry, thereby obtaining a coated porous substrate; (iii) drying the coated porous substrate of step (ii), thereby obtaining a separator. Steps (i) to (iii) are carried out as described elsewhere herein.

Since the descriptions of the porous substrate, the inorganic particle layer, the inorganic particles, and the metal silicate are as described above, detailed description will be omitted.

Any common method known in the art may be applied without limitation to a method for preparing a slurry, and according to a non-limiting example without particular limitation, the slurry may be prepared by dispersing the inorganic particles by stirring, and the agglomerated inorganic particles may be dispersed using a ball mill, a bead mill, and the like.

The coating slurry includes inorganic particles, an inorganic binder, and a solvent, and the solvent may be water, lower alcohols such as ethanol, methanol, and propanol, solvents such as dimethylformamide, acetone, tetrahydrofuran, diethylether, methylene chloride, DMF, N-ethyl-2-pyrrolidone, hexane, and cyclohexane, or a mixture thereof, but is not necessarily limited thereto.

In an exemplary embodiment, a solid content of the coating slurry is not particularly limited, but for example, may be 1 to 50 wt%, 5 to 30 wt%, or 10 to 30 wt%, but is not limited thereto.

In an exemplary embodiment, the coating slurry may further include an organic compound having a lower content than the inorganic binder, and since the description of the organic compound is as described above, detailed description will be omitted.

In an exemplary embodiment, the metal silicate included in the coating slurry may have a structure in which a metal oxide and silica are contained at a specific mole ratio, and in terms of coatability of the coating slurry, may contain a metal oxide, silica, and water at a specific mole ratio. Specifically, a mole ratio between the metal oxide and the silica may be 1:4 to 1:10, specifically 1:4 to 1:9, more specifically 1:4.5 to 1:8.5, and more specifically 1:5 to 1:8.

In an exemplary embodiment, the metal silicate included in the coating slurry may be represented by the following Chemical Formula 1 or 2:

[Chemical Formula 1]   $M_2O \cdot nSiO_2$

wherein M is an alkali metal, and n is 4 to 10,

[Chemical Formula 2]   $M_2O \cdot nSiO_2 \cdot xH_2O$

wherein M is an alkali metal, n is 4 to 10, and x is an integer of 50 to 150.

In Chemical Formula 1 or 2, n may be 4 to 9, 4.5 to 8.5, or 5 to 8.

Since the metal silicate satisfies Chemical Formula 1 or 2, an effect of connecting and fixing the inorganic particles together and the inorganic particle layer and the porous substrate together may be implemented better. Accordingly, the separator according to an exemplary embodiment may have a better bonding force between the inorganic particles and a better adhesive strength between the porous substrate and the inorganic particle layer, and also implement better heat shrinkage rate properties at a small thickness.

The method for manufacturing a separator according to an exemplary embodiment may further include introducing a polar group on the surface of the porous substrate by a hydrophilic surface treatment, before forming the inorganic particle layer. Herein, the polar group may be, for example, a carboxylic acid group, an aldehyde group, or a hydroxyl group, but is not limited thereto. In an exemplary embodiment, the hydrophilic surface treatment may be performed by including one or more of a corona discharge treatment and a plasma discharge treatment. Since the polar group is introduced to the surface of the porous substrate, a separator having excellent heat shrinkage rate properties and adhesion at a small thickness simultaneously may be manufactured.

As a method for coating the coating slurry, any common method known in the art may be applied without limitation, and according to a non-limiting example, roll coating, spin coating, dip coating, bar coating, die coating, slit coating, inkjet printing, and a combination of these methods may be applied. The coated slurry may be dried to form an inorganic particle layer. Drying for forming the inorganic particle layer is not particularly limited, but may be performed at 100°C or lower or 30 to 60°C.

The present disclosure may provide an electrochemical device including the separator according to an exemplary embodiment of the exemplary embodiments described above. Since the electrochemical device includes the separator described above, it may have excellent thermal stability at a high temperature. In addition, since the electrochemical device includes the separator described above, it has decreased electrical resistance and may have excellent lifespan characteristics.

The electrochemical device may be all known energy storage devices, and though it is not particularly limited, as a non-limiting example, may be a lithium secondary battery. Since the lithium secondary battery is well known and its configuration is also known, it will not be described in detail in the present disclosure.

The lithium secondary battery according to an exemplary embodiment may include the separator described above between a positive electrode and a negative electrode. Herein, the positive electrode and the negative electrode may be used without limitation as long as they are commonly used in the lithium secondary battery.

When the separator according to an embodiment is commonly used in a battery, the manufacturing method follows a common manufacturing method in which a negative electrode, a separator, and a positive electrode are arranged and assembled, and an electrolyte solution is injected thereto to complete the manufacture, and thus, the manufacturing method will not be described any more in detail.

Hereinafter, the examples of the present disclosure will be further described with reference to the specific experimental examples. It is apparent to those skilled in the art that the examples and the comparative examples included in the experimental examples only illustrate the present disclosure and do not limit the appended claims, and various modifications and alterations of the examples may be made within the range of the scope and spirit of the present disclosure, and these modifications and alterations will fall within the appended claims.

**[Method for measuring physical properties]**

1. Measurement of heat shrinkage rate (%)

A separator was cut into a square shape with a side of 10 cm and a transverse direction (TD) and a machine direction (MD) were indicated. A sample was placed in the center, 5 sheets of paper were placed on and under the sample, respectively, and the four sides of the paper were wrapped with tape. The sample wrapped in paper was allowed to stand in a hot air drying oven at 130°C (or 150°C) for 60 minutes. Thereafter, the sample was taken out of the oven, the separator was measured with a camera, and the heat shrinkage rate in the width direction was calculated using the following equation:

TD heat shrinkage rate (%) = ((TD lenght before heating - TD lenght after heating) / TD lenght before heating) $\times$ 100

2. Measurement of $\Delta$ Gurley permeability (sec/100 cc)

$\Delta$ Gurley permeability was measured according to the standard of ASTM D726, using Densometer available from Toyoseiki. A time it took for air of 100 cc to pass through an area of a separator of 1 in$^2$ which was recorded in seconds was measured as Gurley permeability, and calculated using the following equation:

$\Delta$ Gurley permeability (sec/100 cc) = Gurley permeability of separator having inorganic particle layer formed thereon - Gurley permeability of porous substrate

3. Adhesive strength test of strawboard

A separator was cut into a size of the width 50 mm × length 50 mm, and was placed on a rubber pad with an inorganic particle layer placed underneath. A black strawboard (width 20 mm × length 50 mm × thickness 0.25 mm) was placed between the separator and the rubber pad, and a constant pressure (10 g/cm$^2$) was applied using a presser. The black strawboard was forcefully pulled aside, and a degree of an inorganic material adhered on the surface was confirmed and was identified as A/B/C depending on the adhered degree, considering the following grade:

A: no adhesion
B: a small amount of inorganic material adhered
C: binder and inorganic material adhered together

4. Measurement of electrical properties of battery

Batteries were manufactured as follows, using the separators of the following examples and the comparative examples, the manufactured batteries were subjected to aging and degassing operations and fully charged to 4.2 V, and the initial resistance (mQ) of the battery was measured in a J-pulse manner.
94 wt% of $LiCoO_2$, 2.5 wt% of polyvinylidene fluoride as a fusion adhesive, and 3.5 wt% of carbon black as a conductive agent, based on the total weight of the positive electrode active material, were added to N-methyl-2-pyrrolidone (NMP) as a solvent, and stirring was performed to prepare a uniform positive electrode slurry. The slurry prepared above was coated on an aluminum foil having a thickness of 30 $\mu$m, dried, and pressed to manufacture a positive electrode having a total thickness of 150 $\mu$m. 95 wt% of artificial graphite, 3 wt% of acryl-based latex having $T_g$ of -52°C as a fusion adhesive, and 2 wt% of carboxymethyl cellulose (CMC) as a thickener, based on the total weight of the negative electrode active material, were added to water as a solvent, and stirring was performed to prepare a uniform negative electrode slurry. The slurry prepared above was coated on a copper foil having a thickness of 20 $\mu$m, dried, and pressed to manufacture a negative electrode having a total thickness of 150 um. The positive electrode, the negative electrode, and the separators of the examples and the comparative examples manufactured above were stacked in a manner in which the separator was interposed between the positive electrode and the negative electrode to assemble a pouch type battery, and then an electrolyte solution in which 1 M lithium hexafluorophosphate ($LiPF_6$) was dissolved in a solution including ethylene carbonate (EC), ethylmethyl carbonate (EMC), and dimethyl carbonate (DMC) at a volume ratio of 30:50:20 was injected, and sealing was performed to manufacture a secondary battery having a capacity of 2 Ah.

<Example 1>

(Preparation of coating slurry)

100 parts by weight of boehmite having an average particle diameter (D50) of 0.2 $\mu$m as inorganic particles and 1.5 parts by weight of polycarboxylate (HS-DISPERSANT 5803 available from San Nopco) as a dispersant were added to distilled water, based on the total weight of the solid content, and dispersion was performed with a bead mill for 10 minutes to prepare a mixture. Next, 5 parts by weight of lithium silicate ($Li_2O \cdot nSiO_2$, n=5) as a binder and 0.2 parts by weight of dioctyl sodium sulfosuccinate as a wetting agent were added to the mixture, and stirring was performed to prepare a coating slurry having a solid content concentration of 20 wt%.

Manufacture of separator

A polyethylene porous film having a polar group introduced to the surface (porosity: 42%, average thickness: 9 $\mu$m) was used as a porous substrate. Both surfaces of the porous film was corona discharge treated (power density: 2 W/mm) to introduce a surface polar group, and the corona surface treatment was performed at a speed of 5 mpm (meter per minute). The coating slurry prepared above was bar coated on both surfaces of the porous substrate to perform application and then dried, thereby manufacturing a separator having an inorganic particle layer having an average thickness of 1.0 um, respectively formed on both surfaces of the porous substrate. The physical properties of the separators are listed in the following Table 1.

**<Example 2>**

A separator was manufactured in the same manner as in Example 1, except that the contents of the dispersant and the wetting agent were changed to 0.7 parts by weight and 0.05 parts by weight, respectively, in the preparation of the coating slurry. The physical properties of the separators are listed in the following Table 1.

**<Example 3>**

A separator was manufactured in the same manner as in Example 1, except that sodium silicate ($Na_2O \cdot nSiO_2$, n=5) was used as the inorganic binder instead of lithium silicate. The physical properties of the separators are listed in the following Table 1.

**<Example 4>**

A separator was manufactured in the same manner as in Example 1, except that potassium silicate ($K_2O \cdot nSiO_2$, n=5) was used as the inorganic binder instead of lithium silicate. The physical properties of the separators are listed in the following Table 1.

**<Example 5>**

A separator was manufactured in the same manner as in Example 1, except that aluminum silicate ($Al_2O_3 \cdot nSiO_2$, n=5) was used as the inorganic binder instead of lithium silicate. The physical properties of the separators are listed in the following Table 1.

**<Example 6>**

A separator was manufactured in the same manner as in Example 1, except that boehmite having an average particle diameter (D50) of 0.6 um was used as the inorganic particles instead of boehmite having an average particle diameter (D50) of 0.2 um. The physical properties of the separators are listed in the following Table 1.

**<Example 7>**

A separator was manufactured in the same manner as in Example 1, except that lithium silicate ($Li_2O \cdot nSiO_2$) wherein n is 3.5 was used as the inorganic binder instead of lithium silicate ($Li_2O \cdot nSiO_2$) wherein n is 5. The physical properties of the separators are listed in the following Table 1.

**<Example 8>**

A separator was manufactured in the same manner as in Example 1, except that lithium silicate ($Li_2O \cdot nSiO_2$) wherein n is 7 was used as the inorganic binder instead of lithium silicate ($Li_2O \cdot nSiO_2$) wherein n is 5. The physical properties of the separators are listed in the following Table 1.

**<Example 9>**

A separator was manufactured in the same manner as in Example 1, except that lithium silicate ($Li_2O \cdot nSiO_2$) wherein n is 10.5 was used as the inorganic binder instead of lithium silicate ($Li_2O \cdot nSiO_2$) wherein n is 5. The physical properties of the separators are listed in the following Table 1.

**<Example 10>**

A separator was manufactured in the same manner as in Example 1, except that a porous film which was not corona discharge treated and did not have a polar group introduced on the surface (porosity: 42%, average thickness: 9 $\mu$m) was used. The physical properties of the separators are listed in the following Table 1.

**<Comparative Example 1>**

A separator was manufactured in the same manner as in Example 1, except that 3 parts by weight of acryl latex having a glass transition temperature ($T_g$) of -52°C with respect to 100 parts by weight of inorganic particles was used instead of lithium silicate. The physical properties of the separators are listed in the following Table 1.

**<Comparative Example 2>**

A separator was manufactured in the same manner as in Example 1, except that 3 parts by weight of a polyacrylamide-based polymer (weight average molecular weight: 300,000 g/mol) with respect to 100 parts by weight of inorganic particles was used as a binder instead of lithium silicate. The physical properties of the separators are listed in the following Table 1.

### <Comparative Example 3>

A separator was manufactured in the same manner as in Example 1, except that 3 parts by weight of lithium silicate ($Li_2O \cdot nSiO_2$, n=5) and 2 parts by weight of acryl latex having a glass transition temperature ($T_g$) of -52°C with respect to 100 parts by weight of inorganic particles were used as the binder. The physical properties of the separators are listed in the following Table 1.

[Table 1]

| Classification | Physical properties of separator | | | | | Battery |
|---|---|---|---|---|---|---|
| | Total thickness of inorganic particle layer | Heat shrinkage rate (%) | | Δ Gurley permeability | Adhesive strength | Initial resistance |
| | μm | 130°C | 150°C | sec/100 cc | - | mΩ |
| Example 1 | 2 | <1 | <3 | 20 | A | 28.1 |
| Example 2 | 2 | <1 | <3 | 28 | A | 27.9 |
| Example 3 | 2 | <1 | <3 | 25 | A | 28.54 |
| Example 4 | 2 | <1 | <3 | 27 | A | 28.91 |
| Example 5 | 2 | <1 | 7 | 35 | B | 28.32 |
| Example 6 | 2 | <1 | ≦7 | 38 | C | 32.6 |
| Example 7 | 2 | <1 | 6 | 42 | A | 30.6 |
| Example 8 | 2 | <1 | <3 | 28 | A | 27.8 |
| Example 9 | 2 | <1 | 6 | 37 | A | 28.6 |
| Example 10 | 2 | <1 | 4 | 36 | B | 29.1 |
| Comparative Example 1 | 2 | <4 | >50 | 11 | B | 31.36 |
| Comparative Example 2 | 2 | <1 | 10 | 19 | A | 30.44 |
| Comparative Example 3 | 2 | <2 | 18 | 17 | B | 31.22 |

Referring to Table 1, it was confirmed that the separators of Examples 1 to 10 had excellent heat resistance with the heat shrinkage rates at 130°C of less than 1% and the heat shrinkage rate at 150°C of 7% or less even at a small thickness, and also had an excellent adhesive strength with no adhesion or small adhesion in the adhesive strength test, as compared with the separators of the comparative examples.

However, since the separator of Comparative Example 1 used a particulate organic polymer as the binder, the separator was confirmed to have significantly reduced heat resistance and adhesive strength at a small thickness. Since the separator of Comparative Example 2 used an aqueous organic polymer as the binder, the separator was confirmed to have significantly reduced heat resistance at a small thickness.

In addition, though the separator of Comparative Example 3 included the metal silicate according to an exemplary embodiment of the present disclosure as the inorganic binder, the total content of the organic compound including the dispersant, the wetting agent, and the organic binder was higher than that of the inorganic binder, and thus, it was confirmed that heat resistance and adhesive strength at a small thickness were reduced as compared with the examples.

As described above, it was found that since the separator of the present disclosure includes the inorganic particle layer including the metal silicate as the inorganic binder and the organic compound having a lower content than the inorganic binder, significantly excellent heat resistance, permeability, and adhesion may be implemented simultaneously.

The separator according to the present disclosure may have excellent heat resistance even at a small thickness. Therefore, it may have a very low heat shrinkage rate even at a small thickness.

In addition, the separator according to the present disclosure may have excellent adhesion and permeability even at a small thickness.

In addition, since the present disclosure includes the separator according to an exemplary embodiment, an electrochemical device having excellent performance may be provided.

The above description is only an example to which the principle of the present disclosure is applied, and other constitution may be further included without departing from the scope of the present disclosure.

**Claims**

1. A separator suitable for separating a positive electrode from a negative electrode of an energy storage device, comprising:

   a porous substrate; and
   an inorganic particle layer which is placed on one or both surfaces of the porous substrate and includes inorganic particles and an inorganic binder,
   wherein the inorganic particle layer includes an organic compound at a lower content than the inorganic binder, and the inorganic binder includes a metal silicate.

2. The separator of claim 1, wherein the metal silicate connects and fixes the inorganic particles together and the inorganic particle layer and the porous substrate together.

3. The separator of claim 1 or 2, wherein the organic compound includes a first organic compound of any one or more selected from the group consisting of polycarboxylates, sulfonates, and polysiloxane-based compounds; a second organic compound of any one or more selected from the group consisting of ester-based polymers, amide-based polymers, imide-based polymers, acryl-based polymers, styrene-based polymers, vinyl alcohol-based polymers, vinylpyrrolidone-based polymers, cellulose-based polymers; and fluorine-based polymers; or a combination thereof.

4. The separator of claim 3, wherein the organic compound includes less than 30 wt% of the second organic compound, based on the total weight of the organic compound; optionally wherein the organic compound does not include the second organic compound.

5. The separator of any one of claims 1 to 4, wherein

   the metal of the metal silicate is any one or more or two or more metals selected from the group consisting of Group 1, Group 2, and Group 13 metals,
   or wherein
   the metal of the metal silicate is any one or more or two or more metals selected from the group consisting of Group 1 and Group 2 metals.

6. The separator of any one of claims 1 to 5, wherein the metal silicate is represented by the following Chemical Formula 1:

   [Chemical Formula 1]          $M_2O \cdot nSiO_2$

   wherein M is an alkali metal, and n is 4 to 10.

7. The separator of any one of claims 1 to 6, wherein the inorganic particles include any one or two or more selected from the group consisting of metal hydroxides, metal oxides, metal nitrides, metal carbides, and metal sulfates.

8. The separator of any one of claims 1 to 7, wherein the inorganic particles have an average particle diameter (D50) of 1 $\mu$m or less.

9. The separator of any one of claims 1 to 8, wherein a total thickness of the inorganic particle layer formed on the porous substrate is 5 $\mu$m or less.

10. The separator of any one of claims 1 to 9, wherein a heat shrinkage rate in the width direction, which is measured after allowing the separator to stand at 130°C for 60 minutes, is 3% or less,
    and/or
    wherein a heat shrinkage rate in the width direction, which is measured after allowing the separator to stand at 150°C for 60 minutes, is 7% or less.

11. The separator of any one of claims 1 to 10, wherein the inorganic particle layer includes 0.1 to 20 parts by weight of the metal silicate with respect to 100 parts by weight of the inorganic particles.

12. The separator of any one of claims 1 to 11, wherein the porous substrate includes a polar group on a surface.

13. An electrochemical device comprising the separator of any one of claims 1 to 12.

14. The electrochemical device of claim 13, wherein the electrochemical device is an energy storage device, preferably a secondary battery, more preferably a lithium secondary battery.

15. A method for manufacturing a separator, comprising the following steps:

(i) preparing a coating slurry including inorganic particles and a metal silicate, optionally further comprising one or more organic compounds as a dispersant and/or a wetting agent;
(ii) coating on one or both surfaces of a porous substrate with the coating slurry, thereby obtaining a coated porous substrate;
(iii) drying the coated porous substrate of step (ii), thereby obtaining a separator.

FIG. 1

**Separator**

Inorganic particle layer

Porous substrate